# EUROPEAN PATENT SPECIFICATION

(11) **EP 0 364 991 B1**
(45) Date of publication and mention of the grant of the patent: **03.01.1996**
(21) Application number: 89119353.4
(22) Date of filing: 18.10.1989
(51) Int. Cl.: G03B 27/62

(54) **Method of and apparatus for making prints**
Verfahren und Vorrichtung zur Herstellung von Photos
Méthode et dispositif pour faire des photographies

(30) Priority: 19.10.1988 JP 263099/88
(43) Date of publication of application: 25.04.1990
(73) Proprietor: FUJI PHOTO FILM CO., LTD., Kanagawa 250-01 (JP)
(72) Inventor: Tahara, Shuji, Kaisei-machi Ashigarakami-gun Kanagawa (JP); Sakamoto, Kiichiro, Kaisei-machi Ashigarakami-gun Kanagawa (JP)
(74) Representative: Grünecker, Kinkeldey, Stockmair & Schwanhäusser Anwaltssozietät

(56) References cited:
- DE-A- 3 826 152
- PATENT ABSTRACTS OF JAPAN vol. 12, no. 339 (P-757)[3186] 12th September 1988 & JP-A-63 97 931
- PATENT ABSTRACTS OF JAPAN vol. 12, no. 339 P-757)[3186] 12th September 1988 & JP-A-63 97 930

## Description

### Background of the Invention

The present invention relates to a method of and an apparatus for making prints from a film.

In a large scale of photographic laboratory, after inspecting a negative film by the use of an inspection apparatus such as a notcher-puncher, the negative film is threaded into a printer. To print the negative film, an exposure is determined based on a exposure correction data input in the inspection process and data obtained in the print process. In the printer, the frames of the negative film 18 are placed in an exposure position by controlling the length of movement of the negative film. Such a negative film control is effected by counting drive pulses needed to move the negative film by a length equal to the distances between adjacent two notches. Each frame of the negative film 18 is specified by counting notches. To detect notches, there is a notch sensor disposed before the exposure position.

Mini-laboratory printing systems, which have been developed in an attempt at simplifying a printer and its operation, increasingly becomes popular and widely spreaded. Such a mini-laboratory printing system is adapted to place frames of a negative film in an exposure position in order first for inspecting and then for printing. In an inspection process, the negative film is visually inspected regarding to the position of a frame of the negative film placed in the exposure position, the necessity of making a print from the frame, subject failures included in the frame and so forth. If the frame is placed in the exposure position with a positional deviation, position data of the frame is collected after effecting a positional correction. If it is not required to make a print from the frame placed in the exposure position, the negative film is moved without effecting the remaining inspections for the frame so as to place another frame in the exposure position. If the frame in the exposure position is recognized to have a subject failure, correction keys are operated to input exposure correction data. After these inspections, a print key is operated to start the printer to print. Then, a light measurement is effected to detect exposure data for obtaining exposures for three colors taking exposure correction data into consideration. Thereafter, an exposure is made based on the exposures for the three colors to make a color print.

In the mini-laboratory printing system wherein the negative film is passed through the exposure position one time for printing, inspection and print are alternatively effected frame by frame. Such an alternative operation restricts the operator for a long time and increases the cost of making prints.

In an attempt at avoiding such a problem, a convenient mini-laboratory printing system is known from Japanese Unexamined Patent Publication No. 61-91648. In the printing system, all of the frames of negative film are inspected before being printed. That is, the negative film is intermittently moved in one direction to inspect the frames one by one and, after the inspection, intermittently moved back in the opposite direction to print. In either process of inspecting or printing the film, it is essential to accurately place the frames in the exposure position. To position the film, a notch sensor is used to detect notches formed in a side margin of the film one for each frame so a to automatically place a frame in the exposure position. In the mini-laboratory system, because of some films having frames for which notches are deviating from centerlines of the frame, it is difficult to correctively place all of the frames in the exposure position.

Japanese Unexamined Patent Application No.61-244,357, JP-A-63-97930 from which a method of making prints according to the first part of claim 1 is known, describes another approach for avoiding the problem, in which a pulse motor is used to intermittently move a film. To place the film, drive pulses fed to the pulse motor are counted. When a frame is inaccurately placed in the exposure position, an inspection is effected after manually correctively placing the frame in the exposure position. Data of position of the inspected frame in inspection is memorized in the form of the number of drive pulses in a memory. In the print process, the position data is read out from the memory to automatically place the same frame in the same position in the exposure position for exposure.

A problem in association with the mini-laboratory printing system wherein the numbers of drive pulses for the film driving pulse motor only are used as film position data in order to place frames of a film in the exposure position is that asynchronism of the pulse motor, if caused, places the film in the exposure position with an accumulative positional error and that a large capacity of memory has to be installed to memory a great number of bits of position data represented by counts of drive pulses applied to the pulse motor.

### Object of the Invention

It is, therefore, an object of the present invention to provide a method of and apparatus for printing in which a small capacity of memory is sufficient to memory position data and a film is accurately placed in an exposure position.

### Summary of the Invention

The above object of the present invention is achieved by providing a method and an apparatus for making prints from a photographic film having the features of claims 1 and 9. If a frame is incorrectively placed in the exposure position, the pulse motor is finely controlled to rotate for position correction for the frame. In the inspection process, the information marks of the photographic film until a frame is placed in the exposure position and drive pulses applied to the pulse motor after the information mark of the frame is detected are counted and memorized as position data for the frame in a memory. In a printing process, the photographic film is moved either in the same or the opposite direction to automatically, accurately place each frame to be printed in the exposure position by controlling the pulse motor based on the position data for the frame retrieved from the memory.

The printing apparatus in accordance with a preferred embodiment of the present invention comprises, in particular, a constant length moving means for applying a predetermined number of drive pulses to the pulse motor so as to move the photographic film in the one direction in the inspection process; a correcting means for correctively driving the pulse motor so as to accurately place the photographic film in the exposure position in the inspection process; a code bit detecting means for detecting either one of the start and end code bars of the DX bar code in the inspection process; a DX code counter actuated when the code bit detector detects the either one of the start and end code bits for counting up the DX codes in the inspection process and counting down the DX codes in the printing process; a drive pulse counter, which is adapted to be reset in synchronism with an initiation of counting of the DX code counter, for counting drive pulses applied to the pulse motor; an operating means for calculating a number of drive pulses, (N - n - m), wherein N, n and m are, respectively, taken as the number of drive pulses necessary to move the photographic film by a length between either ones of the start and end code bits of adjacent two the DX codes, the number of drive pulses counted by the drive pulse counter before each the frame is placed in the exposure position and the number of drive pulses corresponding to a time gap between timings at which the code bit detecting means detects the either one of the start and end code bits in the one and the other directions, respectively; a memory means for memorizing a combination of the number of drive pulses (N - n - m) and a counts of the DX code counter as position data for each the frame in the exposure position; and a controlling means for reversibly rotating the pulse motor so as to move back the photographic film until the same pisition data as that read out from the memory for a frame to be printed is obtained in the printing process becomes, thereby accurately placing the frame to be printed in the exposure position.

In accordance to the present invention, used as position data is a combination of the number of the information marks counted until the frame is place in the exposure position and the number of drive pulses applied to the pulse motor after the information mark for the frame is detected, in the inspection process. In the printing process, when position data for a frame becomes coincident with the position data for the frame read out from the memory, the pulse motor is stopped, thereby automatically, accurately placing the frame in the same exposure position as that wherein the frame is inspected in the inspection process.

In the inspection process, the photographic film is inspected either as to position only or as to the necessity of print. It may be additionally effected to input data of exposure and/or data of exposure correction for the frame placed in the exposure position. For providing data of exposure, a line sensor or an image area sensor is used to detect the intensity of light passed through the frame. If such a line sensor is used, it is so disposed as to measure the frame moving toward the exposure position in two dimensions. On the other hand, if such an image area sensor is used, it is disposed facing the frame in the exposure position.

In the printing process, the photographic film is so controlled to automatically place a frame to be printed in the exposure position based on the position data. If no measurement is effected in the inspection process, the film is measured in the printing process immediately before being printed.

In place of moving the film by a constant length, an edge of a frame may be detected so as to place the edge at a specific location.

For making prints with a high efficiency, it is preferred to move forward the film in one direction in the inspection process and move back it in the opposite direction in the printing process. In such a case, a time gap will be caused between timings at which start code bits or end code bits of a DX code are detected or read by a code reader. To correct the time gap, it is preferred to use the number of pulses represented by (N - n - m) as position data in the printing process wherein N, n and m are taken as the number of drive pulses necessary to move the photographic film by a length between either ones of the start and end code bits of adjacent two DX codes, the number of drive pulses counted by the drive pulse counter before each the frame is placed in the exposure position and the number of drive pulses corresponding to a time gap between timings at which the code bit detecting means detects the either one of the start and end code bits in the one and the other directions, respectively.

### Brief Description of the Drawings

Figure 1 is a schematic illustration showing a photographic printing apparatus in accordance with a preferred embodiment of the present invention;
Figure 2 is an explanatory illustration showing the location of a DX code sensor relative to a photographic film with DX codes;
Figure 3 is a functional block diagram of a pulse motor drive control circuit;
Figure 4 is a flow chart illustrating a sequence of printing;
Figure 5 is a flow chart illustrating a sequence of printing in which a negative film is measured in an inspection process; and
Figure 6 is a flow chart illustrating a sequence of printing in which a negative film is placed in an exposure position by detecting a start bit of a DX code in an inspection process.

### Detailed Description of the Invention

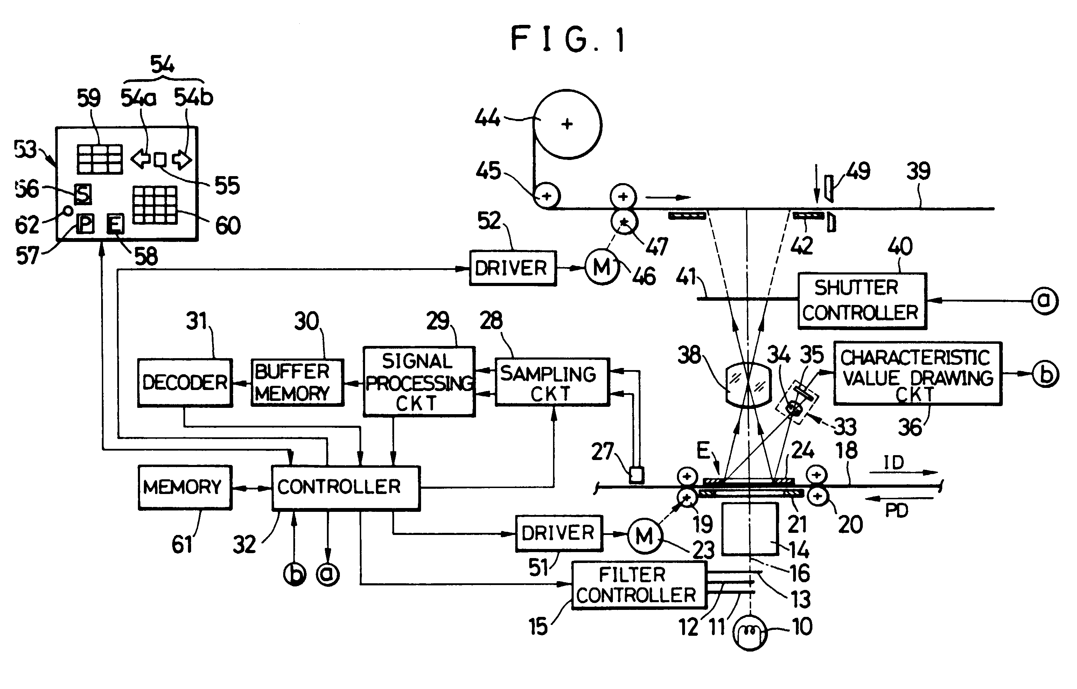

Referring to the drawings in detail, in particular to Fig. 1, a printing apparatus operative in two different modes, inspection and printing, in accordance with a preferred embodiment of the present invention is shown, having a light source, such as a halogen lamp 10, emitting white light. The white light from the halogen lamp 10, after passing through three color filters, cyan, magenta or yellow filters 11, 12 and 13, passes a mirror box 14 and diffused sufficiently thereby. Each color filter 11, 12, 13 is controllably insertable into the printing light path 16 independently from the other two by a filter controller 15 so as to regulate the three color components of light, thereby controlling the quality of light. The mirror box 14 comprises a open ended square box-shaped tube with mirrored inside walls and diffusion plates attached to the top and bottom of the box-shaped tube.

The diffused light illuminates a negative film 18 held by means of a film holder 21 disposed at an exposure position E. To keep the negative film 18 flat, a framing mask 24 is provided above the film holder 21 and holds down the negative film 18 against the film holder 21. The framing mask 24 is slightly moved up by means of a solenoid (not shown) upon the movement of film. The negative film 18 is moved by means of a pair of moving rollers 19 and 20 in one direction, for example from the left to the right as viewed in Fig. 1, in the film inspection mode or in the opposite direction from the right to the left in the printing mode. The rollers 19 and 20 are operationally coupled by means of a chain belt and the roller 19 is driven by means of a reversible pulse motor 23.

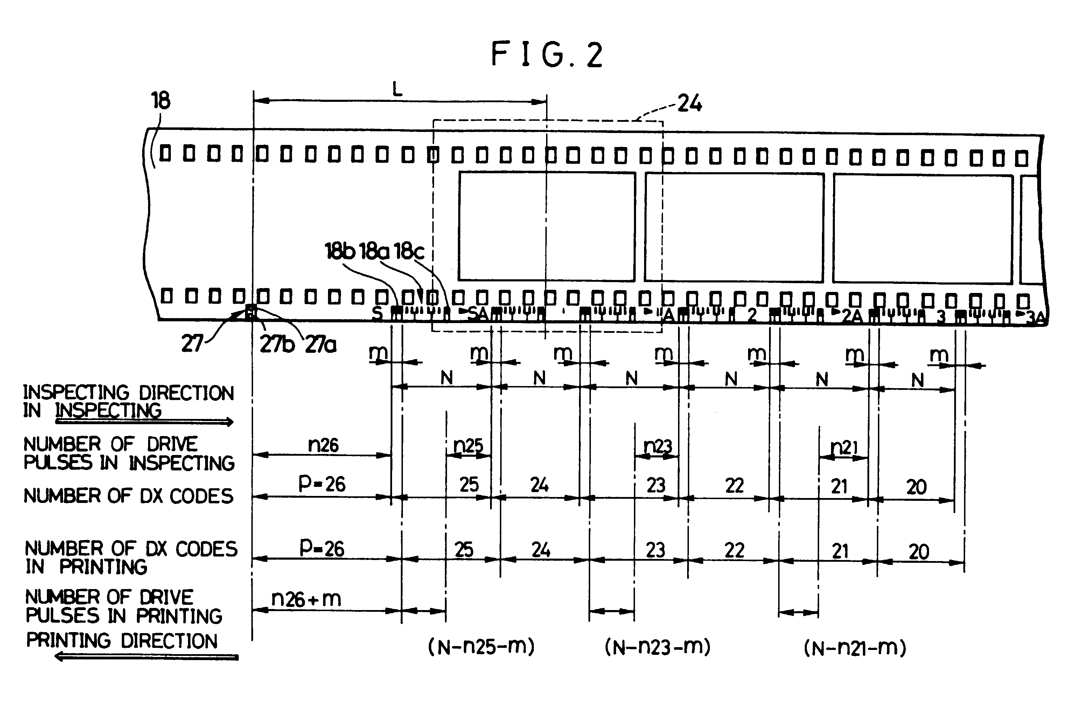

A DX code sensor 27 is disposed adjacent to the rollers 19 on one side of the exposure position E to read DX codes 18a formed in one side margin of the negative film 18 as shown in Fig. 2. The DX code sensor 27 is disposed at a distance L from the center of the exposure position E which an axis of the printing light path intersects. The distance L is desirable to be as short as possible. For example in this example, the distance L is 1.5 time as long as the size of an frame of the negative film 18. For the DX code sensor 27, although a transparent type of code sensor comprising separate light emitting unit and light sensing unit is used in this embodiment, nevertheless, another type, such as a reflection type, of sensors may be taken. As shown in Fig. 2, the DX code sensor 27 includes a clock bar sensor 27a and a data bar sensor 27b.

Outputs from the DX code sensor 27 are sampled by means of a signal sampling circuit 28 every one frame advancement of the negative film 18. The sampled signals are, after processed by means of a signal processing circuit 29, stored in a buffer memory 30. A decoder 31 decodes the sampled signals stored in the buffer memory 30 into a form of exposure correction data depending upon the type of the negative film 18 and outputs an exposure correction signal to a controller 32 which is mainly comprises of a general use microcomputer. The signal processing circuit 29 outputs a bit signal representative of a start bit 18b of a DX code 18a to a DX code counter 70 in the controller 32 which will be described in detail later. In place of the start bit 18b, an end bit 18c of the DX code 18a may be detected.

A scanner 33 consisting of a color image area sensor 35 and a lens 34 is disposed upper right the exposure position E and detects light passed through pixels of the negative film 18 into which a frame of the negative film is noticnally divided so as to output a signal proportional to the intensity of light by color. Signals from the scanner 33 are transferred to a characteristic value drawing circuit 36 for calculation of image characteristic values as exposure control parameters, such as a mean transparent density, a maximum density and a minimum density of a frame by color, which in turn are transferred to the controller 32.

A printing lens 38 is disposed right above the exposure position E to project an enlarged image of a frame placed in the exposure position E onto a color paper 39 defined by a framing mask 42, thereby creating a latent image of the frame in the color paper 39. A shutter 41 controlled by a shutter controller 40 is disposed between the printing lens 38 and the framing mask 42 to control an exposure. The color paper 39 is withdrawn from a roll 44 by one frame by means of a pair of rollers 47 driven by a pulse motor 46 and placed in the exposure position E. After the framing mask 42, there is a cutter 49 to cut off part of the color paper 39 every predetermined number of exposures. The part of the color paper 39 thus cut off is then sent to a photographic processing unit (not shown). The direction and the number of rotation of each pulse motor 23, 46 is controlled by the controller 32 through a driver 51, 52.

The controller 32 determines a proper exposure for the frame based on various correction data and the characteristic values. To determine exposure, the controller 32 is connected to a keyboard 53 to input correction values through various keys of a keyboard 53. The keyboard 53 is provided with fine position control keys 54 for finely displacing the negative film 18 in opposite directions, respectively so as to exactly position the negative film in the exposure position E, a pass key 55 for manually moving the negative film 18 by one frame, a start key 56 for starting inspection procedure, a print key 57 for starting printing, an inspection end key 58 for terminating inspection and numerical and alphabetical keys 60, and an indicator 62. The controller 32 is further connected to a memory 61 for storing various data provided by the controller 32.

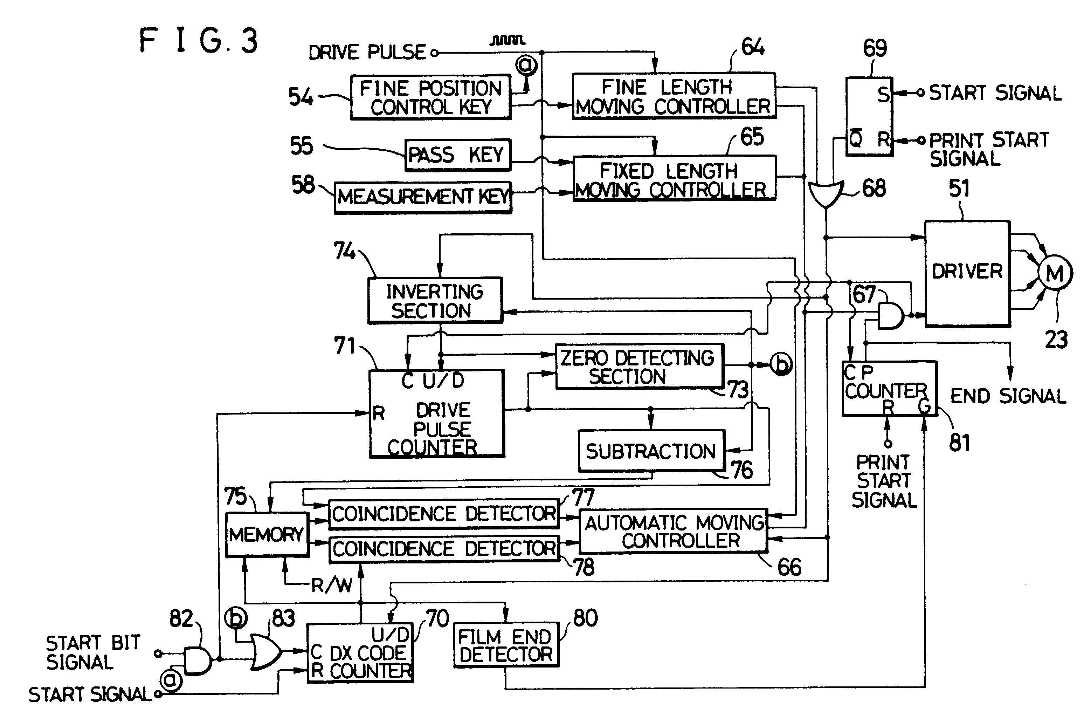

Referring to Fig. 3, a functional block diagram of the controller 32 for controlling the reversible pulse motor 23 is shown. Drive pulses are delivered to three drive controllers, namely a fine length movement controller 64, a fixed length movement controller 65 and an automatic movement controller 66. The fine length forwarding controller 64 is actuated by the operation of either one of the fine position control keys 54 to divide a frequency of drive pulses and sent the frequency divided drive pulses to the driver 51 through AND gate 67. The driver 51 causes the pulse motor 23 to rotate at a relatively low speed in accordance with the frequency divided drive pulses upon the operation of either one of the fine position control keys 54, thereby exactly positioning the negative film 18 in the exposure position. The fine position control keys 54 outputs direction signals indicating the directions of rotation. The direction signal is sent to the driver 51 through OR gate 68. The driver 51 drives the pulse motor 23 in a forward direction upon receiving a low level signal (L) or in a reverse direction upon receiving a high level signal (H). In order to prevent DX code counter 70 from counting, the fine position control keys 54 output a count inhibit signal in the form of a low level signal (L) to an AND gate 82 when either one is operated.

The fixed length forwarding controller 65 outputs a predetermined number of drive pulses to the driver 51 through the AND gate 67 when either the pass key 55 or the inspection end key 58 is operated, thereby causing the pulse motor to rotate so as to forward the negative film 18 by one frame. The length of forward movement of film is determined based on the type of negative film and the size of film (half or full). To prevent the pulse motor 23 from getting asynchronous rotation, drive pulses are frequency divided so as to cause the pulse motor 23 to start at an increased speed and to stop decreasing its speed.

A flip-flop 69, which is maintained set in the inspection mode or reset in the print mode, outputs a signal to the driver 51 through the OR circuit 68 to control a direction of rotation of the pulse motor 23.

The DX code counter 70 and a drive pulse counter 71 are provided to find a present position of the negative film 18. The DX code counter 70 counts the DX codes 18a to roughly measure the length of movement of the negative film 18, the drive pulse counter 71 counts drive pulses needed to move the negative film 18 by a distance from one DX code to the next DX code. From the counted values by the DX code counter 70 and the drive pulse counter 71, data of a position of the negative film 18 is provided.

The DX code counter 70 receives an output from the OR gate 68 at its up-down terminal and counts up a start bit signal upon starting a forward movement of the negative film 18 or count down a start bit signal upon starting a reverse movement of the negative film 18. The DX code counter 70 is reset by a start signal. The DX code counter 70 is connected with an OR gate 83 so as to start counting down not by a start bit signal but by an output from a zero detecting section 73 when zero detecting section 73 detects that the drive pulse counter 71 counts down over zero (0) indicating that the negative film 10 is reversely moved beyond a DX code 10a upon the operation of the fine position control keys 54.

The drive pulse counter 71 counts up drive pulses when the negative film 18 is in its forward movement or counts down them when the negative film 18 is in its reverse movement. If the zero detecting section 73 detects the fact that the drive pulse counter counts down to zero, an inverter section 74 temporarily causes the drive pulse counter 71 to count up drive pulses even though when the negative film 18 is in its reverse movement. This is made for the purpose of preventing the drive pulse counter 71 from continuously counting down drive pulses after the drive pulse counter 71 counts down to zero when the fine position control key 54a has been operated and of enables to position the last frame of the negative film 18, of which a DX code is not counted, by counting down drive pulses. Accordingly, if the fine position control key 54a is operated to move the negative film in a reverse direction beyond a DX bar code 18a or to move back the negative film at the beginning of printing, after reaching the original position where the drive pulse counter 71 has counted down to zero, the drive pulse counter 71 is changed again to count up drive pulses. If the pulse motor 23 changes in the direction of rotation during the inversion of counting of the drive pulse counter 71, the inverter section 74 stops its operation, admitting the drive pulse counter 71 to count up or down in accordance with the direction of rotation of the pulse motor 23. The OR gate 82 prevents the DX code counter 70 from starting counting DX codes at the presence of a DX code signal. When the zero detecting section 73 detects that the negative film returns to the original position, it outputs one pulse to the OR gate 83, starting the DX code counter 70 to count down DX codes.

As illustrated in Fig. 2, because the negative film 18 is reversed in the direction of movement between the inspection mode and the print mode, the drive pulse counter 71 changes direction between counting up and down, and a timing at which the DX code sensor 27 detects a start bit 18b of a DX code 18a is delayed by a time corresponding to the width of the start bit 18b. This results in a difference of data of film position between the inspection mode and the print mode. To avoid the difference, a subtraction section 76 is provided to alter the count value by the drive pulse counter 71 into the number of pulses provided when the counter counts pulses in the opposite direction. Because a difference between timings at which a start bit is detected when the negative film 18 is in the forward movement and in the reverse movement, respectively, depends on the printer itself, the difference is avoided by subtracting the number of pulses for the difference from the counted number of pulses memorized in a memory 75. For example, taking n for the counted value of the drive pulse counter 71 when a frame is in an inspection position, N for the number of pulses corresponding to a distance between two start bits of each adjacent DX codes, and m for the number of pulses corresponding to a timing gap of detecting a start bit between the opposite movements of the negative film, the subtraction section 76 executes an operation of (N - n - m).

In the case if the fine position control key 54a is operated to move the negative film 18 more than the with of start bit 18b so as to finely pisition a frame or in the case of the last frame for which the DX code counter 70 does not count, it is suffice to memorize the count value itself of the drive pulse counter in the memory 75. For this purpose, a detection signal from the zero detecting section 73 is connected to the subtraction section 76. If receiving a zero detection signal, the subtraction section 76 does not execute its ordinary down counting and the counted value of the drive pulse counter 71 itself is memorized in the memory 75.

In the inspection mode, as is shown in Fig. 2, memorized in the memory 75 are a counted value p of the DX code counter 70 and a result of the subtraction operation of (N - nᵢ - m). In this operation expression, nᵢ is a counted value of tne DX code counter 71 when a counted value p of the drive pulse counter 71 counts i (i = 1, 2, ....., n). In the print mode, position data, the number of drive pulse (N - nᵢ - m) and the number p, of DX code, provided in the inspection mode are separately read out from the memory 75 and transmited to coincidence detecting sections 77 and 78, respectively.

The automatic movement controller 66, which is connected with an output of the OR gate 67 so as to be mabe operative only in the print mode, transmits drive pulse to the driver 51 either in as-generated condition or in frequency divided condition. This automatic movement controller 66 controls the reverse rotation of the pulse motor 23 to start at a low speed and gradually speed up to a predetermined constant speed. When a coincidence signal is provided by the coincidence detecting section 78, the automatic movement controller 66 divides frequency of the drive pulses and sends the frequency divided drive pulses to the driver 51 so as to decelerate the pulse motor 23. Thereafter, when a coincidence signal is provided by the coincidence detecting section 77, the automatic movement controller 66 interrupts the frequency divided drive pulses to the driver 51 so as to bring the pulse motor 23 into stopping.

If the trailing end of the negative film 18 comes off the the moving rollers 20 in the print mode, it is impossible to positioning frames of the negative film 18 by the use of the position data read out from the memory 75. For preventing the negative film 18 from coming off the rollers 20 and stopping the reverse rotation of the pulse motor 23, a film end sensor 80 and a counter 81 are provided. Because the DX code sensor 27 can not detect any DX code after the trailing end of the negative film 18 passes over the DX code sensor 27, the DX code counter 70 stops counting. According to the fact, the film end sensor 80 is adapted to detect based on whether a preselected time period has elapsed after the stop of counting of the DX code counter 70 to output an end signal which in turn is fed to the counter 81. Upon receiving an end signal, the counter 81 opens its gate to count drive pulses. When the counters 81 counts drive pulses up to a predetermined count value corresponding to, for example, one frame length of the negative film 18, the AND gate 67 closes so as to stop the negative film 18. Thereafter, the pulse motor 23 is not caused even though the key is operated.

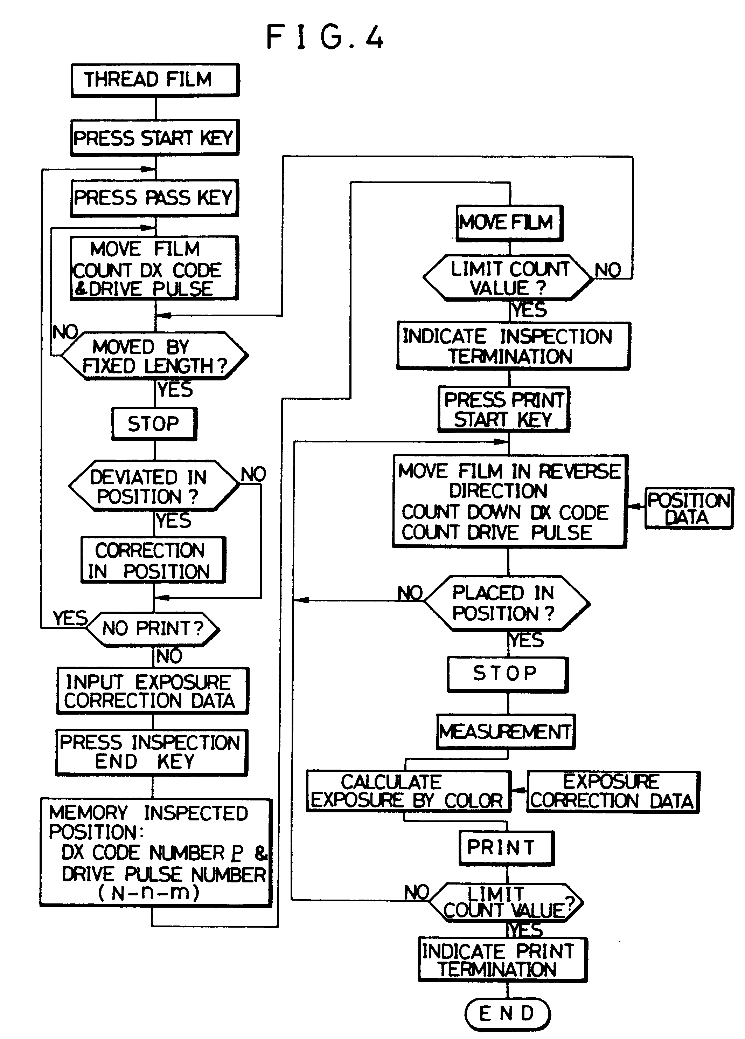

In operation of the printer in accordance with a preferred embodiment of the present invention described above as shown Fig. 4, after threading a negative film 18 between the rollers 19, the controller 32 starts the sequential control of film inspection. In the inspection mode, the white light source 10 is excited to emit white light and the DX code counter 70 is reset. When the flip-flop 69 is reset, a low level signal (L) is sent to the driver 51 through the OR gate 68, causing the pulse motor 23 to be rotatable in the forward direction and setting the DX code counter 70 so as to be operative to count up.

Thereafter, when the pass key 55 is operated, the fixed length forwarding controller 65 operates to sent a predetermined number of drive pulses to the driver 51 through the AND gate 67 so that pulse motor 23 rotates. The rotation of the pulse motor 23 is transmitted to the rollers 19 and 20, forwarding the negative film 18 by a pitch of one frame from the left to the right as viewed in Fig. 1.

Upon the forwarding of the negative film 18, the DX code sensor 27 detects a DX code 18a to output a signal to the sampling circuit 28 which samples one signal from the DX code sensor 27 every predetermined length of the negative film 18 and outputs it to the signal processor 29. The signal processor 29 alters the sampled signal to a digital signal "0" or "1" and sends it to the decoder 30 and at the same time, outputs a start bit signal for a start bit 18c of the DX code 18a detected by the DX code sensor 27. The start bit signal resets the drive pulse counter 71 and on the other hand, is counted by the DX code counter 70.

As the negative film 18 is forwarded, the DX code sensor 27 detects a plurality of DX codes 18a, so that a start bit signal is generated at a certain cycle and counted by the DX code counter 70. The drive pulse counter 71 counts up drive pulses so as to detect the length of movement of the negative film 18 before the DX code counter 70 changes its counts by one increment.

After the completion of one frame film advancement, the inspector visually inspects the negative film 18 over the mask 24. In this visual inspection, the location of the first frame of the negative film 18 is made first. If the first frame of the negative film 18 is accurately located, the fine position control key 54 is operated to shift the negative film 18 so as to avoid a positional deviation of the film 18. Upon operating the fine position control key 54, the pulse motor 23 rotates slowly in the forward or the reverse direction to correctively shift the negative film 18. Drive pulses needed to drive the pulse motor 23 for position correction are counted up or down by the drive pulse counter 71. At the same time as the operation of the fine position control key 54, because the AND gate 82 receives a low level signal (L), the DX code counter 70 is not caused by a start bit signal to count up DX code signals even though the DX code sensor 27 detects a start bit 18b of a DX code 18a but is caused by an output signal from the zero detecting section 73 to count down. If the fine position control key 54a is operated in order to move back the negative film 18, the drive pulse counter is tentatively altered to a counting-up condition by the inverter section 74 when the drive pulse counter 71 counts down to zero, so as to count up pulses after the detection of a start bit signal. At the same time, the DX code counter 70 counts down one.

Then, the inspector visually inspects the first frame of the negative film 18 placed in the inspection position so as to determine whether the frame is to be printed. If the frame is not be needed to be printed because of the first frame having an image blurred, overexposed or underexposed, the pass key 55 is operated to place the next frame of the negative film 18 in the inspection position. For a frame of the negative film 18 which is needed to be printed, the inspector makes a decision whether a print is made with a favorable result by an automatic exposure. If it is expected that the print results in an unfavorable color or density, color and density correction keys 59 are operated to input correction data. The correction data, as well as the number of operation of the color and density correction keys as retrieving data, is memorized in the memory 61 in the inspection process and read out in the print process to determine an exposure.

When the negative film inspection is completed for all frames, the inspection end key 58 is operated. As a result of the operation of the inspection end key 58, the number of DX codes p counted by the DX code counter 70 is sent to the memory 75 and the count value n of the drive pulse counter 71 is sent to the subtraction section 76. Simultaneously, the fixed length forwarding controller 65 is actuated so as to forward the negative film 18 by one frame. Immediately after the one frame movement of the negative film 18, the DX code counter 70 starts counting up when the DX code sensor 27 detects a start bit 18b of a DX code 18 and the drive pulse counter 71 is reset. The count value n of the drive pulse counter 71 upon being reset is sent to the subtraction section 72 to calculate the number of drive pulse (N - n -m). The number of DX codes p and the number of drive pulse (N - n -m) are memorized as position data of the first frame of the negative film 18 in the memory 75. If the negative film 18 is positioned by being moved back by a length longer than the width of a DX code by operating the fine position control key 54a, the count value of the drive pulse counter 71 is memorized in the memory 75 without effecting a subtraction operation in the subtraction section 76.

In the inspection process, the negative film 18 is intermittently moved in one direction and if necessary, corrected in position. Every time of corrective placing a frame of the negative film 18 in position, a visual inspection is effected to input correction data for proper exposure, if necessary. When the trailing end of the negative film 18 pass over the DX code sensor 27, the DX code counter 70 stops counting and the film end detector 80 detects the end of the negative film 18 to output a signal to the counter 81, opening its gate to start counting. In this embodiment, because the DX code sensor 27 is located at a distance equal to one frame length from the center of the exposure position E, the DX code sensor 27 detects the trailing end of the negative film 18 while the negative film 18 is moved so as to place the last frame thereof toward the exposure position E. After the detection of the trailing end of the negative film 18, because the drive pulse counter 71 is not reset and therefore, continues to count drive pulses.

When the inspection end key 58 is operated to terminate inspection after placing the last frame of the negative film 18 in the exposure position E, position data is memorized in the memory 75. At this time, the subtraction section 76 adds the count value n of the drive pulse counter 71 and the number of pulses m corresponding to timing gaps of detecting start bits in both direction together without effecting ordinary subtraction operation. Data of the resultant value, (n + m), is memorized as position data in the memory 75. Thereafter, the pulse motor 23 starts its forward rotation to move the negative film 18. When the negative film 18 moves slightly, the counter 81 reaches its limit count value, thereby causing the AND gate 67 to close so as to stop the pulse motor 23 and the counters 71 and 78. It is permissible that the negative film is not automatically moved by a predetermined length when the inspection end key 58 is operated for the last frame of the negative film 18 and that the counter 81 is actuated to count by operating the inspection end key 58 so as to allow the negative film 18 to move before the counter 81 reaches its limit count value when the fine position control key 54 or the pass key 55 is operated.

Upon the stop of rotation of the pulse motor 23, the indicator lamp 62 flashes to give a notice of the termination of inspection. Then, when operating the print start key 57, the indicator lamp 62 is kept on and the flip-flop 69 and the counter 81 are reset. In the printing process, the position data is retrieved from the memory 75 to accurately place frames of the negative film 18 in the exposure position E. For example, the position data for the last frame is read out first to set the coincidence detector 77 to the number of pulses indicating the position of the last frame and the the coincidence detector 78 to the number of DX codes for the last frame.

After reading out the position data for the last frame of the negative film 18, the automatic movement controller 66 outputs drive pulses to the driver 51 through the AND gate 67. On the other hand, because a reverse signal is fed to the driver 51 from the flip-flop 69, the pulse motor 23 starts its reverse rotation to move back the negative film 18. During the reverse movement of the negative film 18, the drive pulse counter 71 counts up drive pulses fed to the pulse motor 23. When the coincidence detector 77 detects the coincidence between the position data for the last frame of the negative film 18 memorized in the memory and the present position data, it outputs a coincidence signal, so that the automatic movement controller 66 interrupts itself to output drive pulses. Thus, the pulse motor 23 stops. In this manner, the negative frame 18 is correctively positioned so as to locate the last frame at the same position as in the inspection process. The controller 32, after the locating of the last frame of the negative film 18 in the exposure position E, actuates the scanner 33 to measure the last frame to detect the intensity of light transmitting every point of the frame by color. Signals of the intensity of light is directed to the characteristic value drawing circuit 36. There, the signals for three colors, red, green and blue, are altered to density values so as to draw a mean transmittance density, a maximum density, a minimum density and a density of a specified point or a specified area of the last frame of the negative film 18 as characteristic values. The controller 32 calculates an exposure by color by the use of the characteristic values and the exposure correction data read out from the memory 61. In accordance with the exposures, the color filters 11-13 are independently inserted into the printing optical path 13. Thereafter, the light source 10 is excited to emit light for a certain time. In the certain time, the shutter 41 is opened to make an exposure to the color paper 39.

After printing the last frame of the negative film 18, the color paper 39 is withdrawn by one frame so as to place unexposed part thereof over the framing mask 42 and the color filters 11-13 are moved back to their original positions from the printing optical path 13. The position data for another frame of the negative film 18 are read out from the memory 75 and numbers of pulses representing the position of the another frame are set to the coincidence detectors 77 and 78. Thereafter, the pulse motor 23 starts its rotation in the reverse direction, so that the drive pulse counter 71 counts up drive pulses. Unless both of the the coincidence detectors 77 and 78 provide coincidence signals, the automatic movement controller 66 continuously moves the negative film 18. When the DX code sensor 27 detects a start bit 18b of a DX code 18a for the first time in the print process, the signal processing circuit 29 outputs a start bit signal. The start bit signal is, on one hand, counted down by the DX code counter 70 and, on the other hand, resets the drive pulse counter 71 so as to count up drive pulses. Upon each of the coincidence detectors 77 and 78 detects the coincidence between the count value and the position data, it outputs a coincidence signal. At the timing of outpitting the coincidence signals, the automatic movement controller 66 interrupts the output of driving pulses so as to stop the pulse motor 23. In this manner, the frame of the negative film 18 one frame before the last frame is placed in the same position as in the inspection process.

In the above described manner, when the present position data and the position data read out the memory 75 become coincident to each other while the DX code counter 70 counts down and the drive pulse counter counts up, the pulse motor 23 stops, so as to place another frame of the negative film 18 in the exposure position E for printing. By repeatedly effecting this manner, all of the necessary frames are printed. After the end of printing of the first frame, when the negative film 18 is moved back, the trailing end of the negative film 18 passes the DX code sensor 29. Thereafter, the DX code counter 70 stops counting and the film end detector 80 outputs an end signal so as to cause the counter 81 to start counting. The counter 81, when counting up to its limit count value, stops pulse motor 23 stops, thereby outputting a print end signal so as to cause the indicator 62 to flash to indicate that printing has been over.

In the print process, when a predetermined number of exposures are made, the exposed part of the negative film 18 is cut off as a paper strip by the cutter 49 and sent to the photographic processor. The paper strip is, after processing, cut to individual prints.

In the above described embodiment, although using start bit signals provided by detecting start bit signals 18b of DX codes 18a as rough position data, it may be permissible to use frame number bar codes, numerals and characters indicating frame numbers or DX codes.

In the above described embodiment, although, in the inspection process, all frames are visually inspected regarding the necessity of print and subject failure, such visual inspections are omitted when all of the frames of a roll of a film are required to be printed or when they are effected automatically.

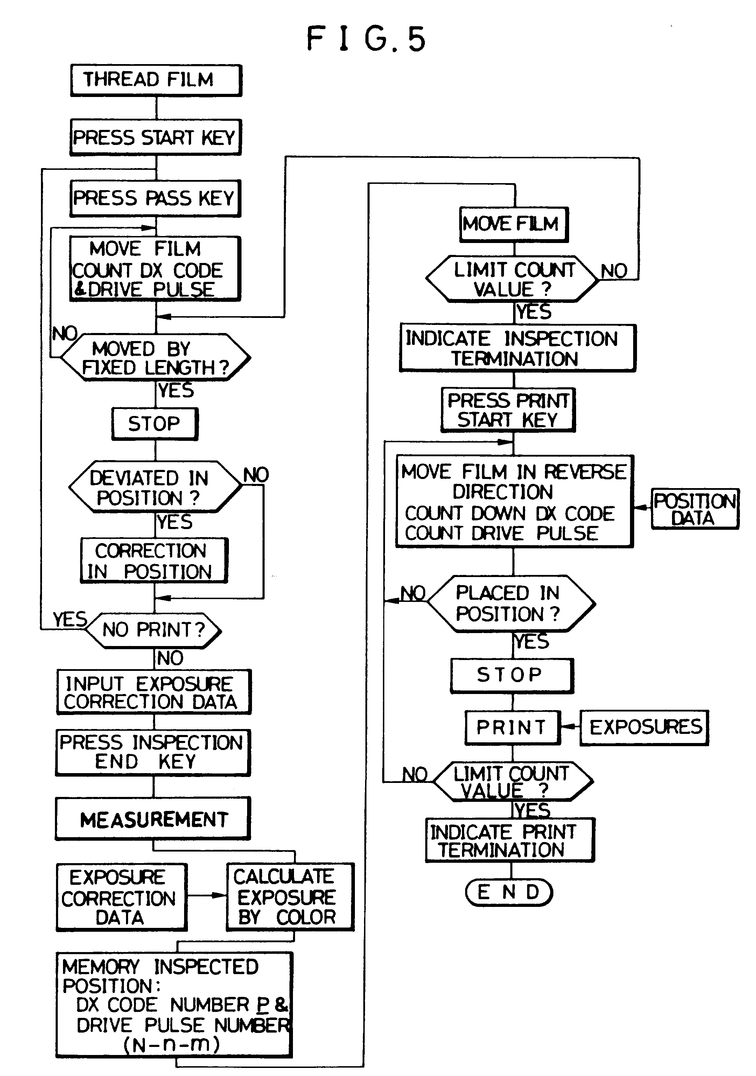

In the embodiment shown in Fig. 5 wherein a light measurement is effected in the inspection process and positioning the negative film 18 and an exposure only are made in the print process, when the inspection end key 58 is operated, the scanner 33 is actuated to measure the negative film 18. The resulting characteristic values from the measurement are used together with manually input exposure correction data to calculate exposures for three colors whose data in turn are memorized in the memory 61. The data of exposure for three colors are read out for effecting proper exposure in the print process after positioning the negative film in the exposure position E.

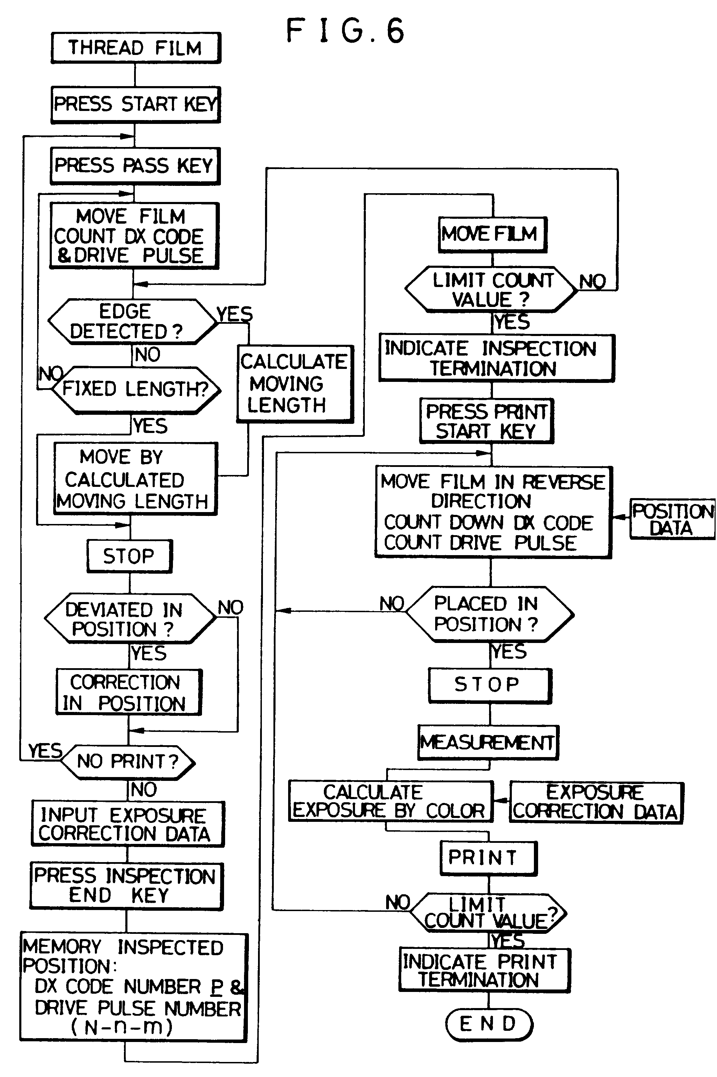

Although, in this embodiment, the negative film 18 is moved by a constant length in the inspection process, it is permissible to position the negative film 18 by detecting a frame itself to be placed in the exposure position E. For this, a start bit of a DX code for the frame to be placed in the exposure position E is detected by the scanner as shown in Fig. 6. That is, in the inspection process, when the scanner detects a start bit for a frame, a length of movement of the negative film 18 is determined in accordance with the size of the negative film 18, full size or half size. Drive pulses as many as necessary to move the film by the determined length are fed to the pulse motor 23. Because of unclear edge of a frame bearing an image of an artificially illuminated subject or an image of an astronomical subject, it is difficult to place accurately the frame in the exposure position E. For avoiding such a difficulty, a length of movement is predetermined in accordance with the size of the negative film so as to stop the pulse motor 23 when the negative film 18 is moved by the predetermined length. In this case, the fine position control key 54 is always used to place accurately a frame in the exposure position E.

In the above embodiment, although the negative film 18 is moved in opposite directions in the inspection and print processes, it is permissible to move in the same direction. In this case, although the negative film 18 should be passed two times through the film holder 21, nevertheless, because the same position data is obtained in the inspection and print processes, it is sufficient to memorize the count value of the drive pulse counter when the pulse motor is driven in the forward direction to place the negative film in the exposure position E. If placing the negative film 18 in the exposure position E by moving back the negative film 18 more than a width of a DX bar code by operating the fine position controlling key 54, it is necessary to transfer the number of drive pulses as was previously described and, however, it needs not be done to correct a timing gap of detection of a start bit.

Although the present invention has been fully described by way of the preferred embodiment thereof with reference to the accompanying drawings, it is to be noted that various changes and modifications are apparent to those skilled in the art. Therefore, unless otherwise these changes and modifications depart from the scope of the present invention as claimed, they should be construed as included therein.

## Claims

1. A method of making prints from a photographic film (18) formed with information marks in association with frames in its side margin at regular spacings in which method the film is intermittently moved by a pulse motor (23) in a first lengthwise direction in an inspection process for automatically roughly positioning every frame of the film in the exposure position (E) by using the information marks, then a manual correction of this position is effected by actuating the pulse motor and storing the number of drive pulses as position data in a memory (75) for accurately positioning every frame in the exposure position (E) followed by a measuring step for detecting the image information of the frame, and finally automatically repositioning every frame in the exposure position by using the stored position data of the frame for printing the frame onto paper
**characterized in that**
the information marks used for the positioning of the frames are the start or end code bits (18b, 18c) of a DX bar code which are counted and stored in combination with the number of drive pulses as frame positioning data.

2. A method as defined in claim 1, wherein each of said frame of said photographic film placed in said exposure position is inspected to determe whether said frame is to be printed in said printing process and measured to determine an exposure for said printing process.

3. A method as defined in claim 1, further comprising determining whether each of said frames is to be printed, inputting data of exposure correction for each of said frames of said photographic film determined to be printed in said printing process, and measuring said photographic film to provide data of light intensity passed through each of said frames so as to determine an exposure from said data of exposure correction and said data of light intensity of said printing process.

4. A method as defined in claim 1, further comprising measuring said photographic film to provide data of exposure for each of said frames placed in said exposure position and memorizing said data of exposure in said inspection process, and retrieving said data of exposure for said frame placed in said exposure position, thereby exposing said frame based on said data of exposure.

5. A method as defined in claim 1, further comprising determining whether each of said frames of said photographic film placed in said exposure position is to be printed, measuring said photographic film to provide data of exposure for each of said frames and memorizing said data of exposure in said inspection process, and retrieving said data of exposure for said frame placed in said exposure position so as to expose said frame based on said data of exposure in said printing process.

6. A method as defined in claim 1, further comprising determining whether each of said frames of said photographic film placed in said exposure position is to be printed, inputting data of exposure corretion for each of said frames determined to be printed, measuring said photographic film to provide data of light intensity passed through each of said frames so as to determine an exposure from said data of exposure correction and said measured data of light intensity, and memorizing data of said exposure in a memory, in said inspection process, and retrieving said data of exposure for said frame placed in said exposure position from said memory so as to expose said frame based on said data of exposure in said printing process.

7. A method as defined in claim 2, 3 or 6, wherein said photographic film is moved without memorizing position data for a frame placed in said exposure position when said frame is determined unnecessary to be printed in said inspection process.

8. A method as defined in any one of said claims 1 to 7, wherein said photographic film is moved by a constant length corresponding to a pitch at which frames are arranged so as to place each said frame in said exposure position.

9. An apparatus for performing the method according to claim 1 for making prints from a photographic film (18) having DX bar codes (18a) including start and end bits (18b,18c) in association with frames in which said photographic film is intermittently moved in one lengthwise direction by a pulse motor (23) so as to place said photographic film in an exposure position (E) frame by frame in an inspection process and in the other lengthwise direction by said pulse motor (23) so as to place said photographic film (18) in the same positions as those where said photographic film is placed in said inspection process in said exposure position in order to project said photographic film onto a photographic paper frame by frame for making prints from said photographic film in a printing process, said apparatus comprising:
a constant length moving means (51) for applying a predetermined number of drive pulses to said pulse motor (23) so as to move said photographic film (18) in said one direction in said inspection process;
a correcting means (54) for correctively driving said pulse motor (23) so as to accurately place said photographic film (18) in said exposure position in said inpection process;
a code bit detecting means (27) for detecing either one of said start and end code bits (18b,18c) of said DX bar code (18a) in said inspection process;
a DX code counter (70) actuated when said code bit detector (17) detects said either one of said start and end code bits (18b,18c) for counting up said DX codes (18a) in said inspection process and counting down said DX codes in said printing process;
a drive pulse counter (71) which is adapted to be reset in synchronism with an initiation of counting of said DX code counter (70) for counting drive pulses applied to said pulse motor;
an operating means (76) for calculating a number of drive pulses N - n - m, wherein N, n, and m are, respectively, the number of drive pulses necessary to move said photographic film (18) by a length between either one of said start and end code bits (18b,18c) of adjacent two said DX codes (18a), the number of drive pulses counted by said drive pulse counter (71) before each of said frames is placed in said exposure position (E) and the number of drive pulses corresponding to a time gap between timings at which said code bit detecting means (27) detects said either one of said start and end code bits (18b,18c) in said one and the other direction, respectively;
a memory means (75) for memorizing a combination of said number of drive pulses (N - n - m) and counts of said DX code counter (70) as position data for each of said frames in said exposure position; and
a controlling means (32) for reversibly rotating said pulse motor (23) so as to move back said photographic film until the same position data as that read out from said memory for a frame to be printed is obtained in said printing process, thereby accurately placing said frame to be printed in said exposure position.

## Patentansprüche

1. Verfahren zum Herstellen von Abzügen von einem photographischen Film (18), der mit regelmäßigen Abständen Einzelbildbereichen zugeordnete Informationsmarkierungen in seinem seitlichen Randbereich besitzt, bei welchem Verfahren der Film bei einem Inspizierungsvorgang durch einen Impulsmotor (23) in einer ersten Längsrichtung intermittierend bewegt wird, um automatisch jedes Einzelbild des Filmes in der Belichtungsposition (E) grob zu positionieren, dann eine manuelle Korrektur dieser Position ausgeführt wird durch Betätigen des Impulsmotors, und die Anzahl der Antriebsimpulse als Positionsdaten in einem Speicher (75) zum genauen Positionieren jedes Einzelbildes in der Belichtungsposition (E) eingespeichert wird, gefolgt von einem Meßschritt durch Erfassen der Bildinformation des Einzelbildes und schließlich jedes Einzelbild automatisch wieder in die Belichtungsposition eingesetzt wird durch Benutzen der gespeicherten Positionsdaten des Bildes, zur Fertigung eines Abzuges des Einzelbildes auf Papier,
**dadurch gekennzeichnet, daß**
die für das Positionieren der Einzelbilder benutzten Informationsmarkierungen die Start- oder End-Kodebits (18b, 18c) eines DX-Strichkodes sind, die gezählt und in Kombination mit der Anzahl der Antriebsimpulse als Rahmenpositionierdaten gespeichert werden.

2. Verfahren nach Anspruch 1, bei dem jedes in die Belichtungsposition gesetzte Einzelbild des photographischen Filmes inspiziert wird, um zu bestimmen, ob von dem Bild in dem Abzugsfertigungsvorgang ein Abzug anzufertigen ist, und gemessen wird, um einen Belichtungswert für den Abzugsfertigungsvorgang zu bestimmen.

3. Verfahren nach Anspruch 1, das weiter umfaßt, daß bestimmt wird, ob von jedem der Einzelbilder ein Abzug zu fertigen ist, daß Daten zur Belichtungswert-Korrektur für jedes Einzelbild des photographischen Filmes eingegeben werden, von dem die Anfertigung eines Abzuges bei dem Abzugsfertigungsvorgang bestimmt ist, und daß der photographische Film gemessen wird, um Daten der durch jedes der Einzelbilder hindurchtretenden Lichtintensität zu schaffen und so einen Belichtungswert für den Abzugsfertigungsvorgang aus den Daten der Belichtungskorrektur und den Daten der Lichtintensität zu bestimmen.

4. Verfahren nach Anspruch 1, das weiter umfaßt, daß der photographische Film gemessen wird, um Daten für die Belichtung für jedes in die Belichtungsposition gesetzte Einzelbild zu schaffen, und daß die Belichtungsdaten bei dem Inspizierungsvorgang gespeichert werden, und daß die Belichtungsdaten für das in die Belichtungsposition versetzte Einzelbild abgerufen werden, um dadurch das Einzelbild aufgrund der Belichtungsdaten zu belichten.

5. Verfahren nach Anspruch 1, das weiter umfaßt, daß bestimmt wird, ob von jedem in die Belichtungsposition gesetzten Einzelbild des photographischen Films ein Abzug zu fertigen ist, daß der photographische Film gemessen wird, um Belichtungsdaten für jedes Einzelbild zu schaffen, daß die Belichtungsdaten während des Inspizierungsvorganges gespeichert werden, und daß die Belichtungsdaten für das in die Belichtungsposition gesetzte Einzelbild abgerufen werden, um so das Einzelbild während des Abzugsfertigungsvorganges aufgrund der Belichtungsdaten zu belichten.

6. Verfahren nach Anspruch 1, das weiter umfaßt, daß bestimmt wird, ob von jedem in die Belichtungsposition versetzten Einzelbild des photographischen Filmes ein Abzug zu fertigen ist, daß Belichtungskorrekturdaten für jedes Einzelbild eingegeben werden, von dem einen Abzug zu fertigen bestimmt wurde, daß der photographische Film gemessen wird, um Daten der durch jedes Einzelbild hindurchtretenden Lichtintensität zu schaffen und so einen Belichtungswert aus den Belichtungskorrekturdaten und den gemessenen Lichtintensitätsdaten zu schaffen, und daß die Belichtungsdaten während des Inspizierungsvorganges in einem Speicher gespeichert werden, und daß die Belichtungsdaten für das in die Belichtungsposition gesetzte Einzelbild aus dem Speicher abgerufen werden, um so das Einzelbild während des Abzugsfertigungsvorganges aufgrund der Belichtungsdaten zu belichten.

7. Verfahren nach Anspruch 2, 3 oder 6, bei dem der photographische Film bewegt wird, ohne Positionsdaten für ein in die Belichtungsposition versetztes Einzelbild zu speichern, wenn während des Inspizierungsvorganges bestimmt wurde, daß es unnötig ist, von dem betreffenden Einzelbild einen Abzug zu fertigen.

8. Verfahren nach einem der Ansprüche 1 bis 7, bei dem der photographische Film um ein konstantes Stück entsprechend einem Wiederholabstand bewegt wird, mit dem die Einzelbilder angeordnet sind, um so jedes Einzelbild in die Belichtungsposition zu plazieren.

9. Vorrichtung zum Ausführen des Verfahrens nach Anspruch 1 zum Herstellen von Abzügen von einem photographischen Film (18) mit DX-Strichkodierungen (18a), welche Start- und End-Kodebits (18b, 18c) in Zuordnung zu Einzelbilder enthalten, wobei der photographische Film durch einen Impulsmotor (23) intermittierend in einer Längsrichtung so bewegt wird, daß der photographische Film Einzelbild um Einzelbild während eines Inspizierungsvorganges in eine Belichtungsposition (E) versetzt wird, und in der anderen Längsrichtung durch den Impulsmocor (23) so bewegt wird, daß der photographische Film (18) in die gleichen Positionen versetzt wird, wie denen, in denen der photographische Film während des Inspizierungsvorganges in die jeweilige Belichtungsposition versetzt wurde, um den photographischen Film Einzelbild um Einzelbild auf photographisches Papier zu projizieren und von dem photographischen Film in einem Abzugsfertigüngsverfahren Abzüge herzusteilen, welche Vorrichtung umfaßt:
ein Konstantlängen-Bewegungsmittel (51) zum Anlegen einer vorbestimmten Anzahl von Antriebsimpulsen an den Impulsmotor (23), um so den photographischen Film (18) bei dem Inspizierungsvorgang in der einen Richtung zu bewegen; ein Korrekturmittel (54) zum korrigierenden Ansteuern des Impulsmotors (23), um so den photographischen Film (18) bei dem Inspizierungsvorgang genau in die Belichtungsposition zu versetzen;
ein Kodebit-Erfassungsmittel (27), um während des Inspizierungsvorganges eines von den Start- bzw. End-Kodebits (18b, 18c) des DX-Strichkodes (18a) zu erfassen;
einen DX-Kodezähler (70), der betätigt wird, wenn der Kodebit-Detektor (27) das eine der Start- bzw. End-Kodebits (18b, 18c) erfaßt, um die DX-Kodes (18a) während des Inspizierungsvorganges aufzuzählen und die DX-Kodes während des Abzugfertigungsvorganges abzuzählen;
einen Antriebsimpulszähler (71), der ausgelegt ist, synchron mit einer Einleitung des Zählens des DX-Kodezählers (70) zurückgesetzt zu werden, um an den Impulsmotor angelegte Antriebsimpulse zu zählen;
ein Betätigungsmittel (76) zum Errechnen einer Antriebsimpulszahl N - n - m, bei der N, n und m jeweils sind die Anzahl der Antriebsimpulse, die zum Bewegen des photographischen Filmes (18) um das Stück zwischen jeweils einem der Start- bzw. End-Kodebits (18b, 18c) von zwei benachbarten DX-Kodes (18a) nötig sind, die Anzahl der durch den Antriebsimpulszähler (71) gezählten Antriebsimpulse, bevor das jeweilige Einzelbild in die Belichtungsposition (E) gesetzt ist, und die Anzahl der Antriebsimpulse, die einem Zeitabstand zwischen Zeitpunkten entspricht, bei denen das Kodebit-Erfassungsmittel (27) den einen der Start- bzw. End-Kodebits (18b, 18c) in der einen bzw. der anderen Richtung erfaßt;
ein Speichermittel (75) zum Einspeichern einer Kombination aus der Anzahl von Antriebsimpulsen (N - n- m) und Zählwerten von dem DX-Kodezähler (70) als Positionsdaten für jedes Einzelbild in der Belichtungsposition; und
ein Steuermittel (32) zum reversiblen Drehen des Impulsmotors (23) in der Weise, daß der photographische Film zurückbewegt wird, bis die gleichen Positionsdaten wie die aus dem Speicher für ein Einzelbild ausgelesenen, von dem ein Abzug zu fertigen ist, während des Abzugsfertigungsvorganges erhalten werden, wodurch das Einzelbild, von dem ein Abzug zu fertigen ist, genau in die Belichtungsposition versetzt ist.

## Revendications

1. Procédé de réalisation d'épreuves à partir d'une pellicule photographique (18) ayant des marques d'information associées à des cadres dans sa marge latérale, avec des espacements réguliers, et, dans ce procédé, la pellicule est déplacée par intermittence par un moteur à impulsions (23) dans un premier sens longitudinal dans une opération d'inspection pour un positionnement automatique grossier de chaque cadre de la pellicule en position d'exposition (E) à l'aide des marques d'information, puis une correction manuelle de la position est réalisée par commande du moteur à impulsions et par mémorisation du nombre d'impulsions de pilotage comme données de position dans une mémoire (75) pour le positionnement précis de chaque cadre en position d'exposition (E), l'opération étant suivie d'une étape de mesure destinée à la détection des informations d'image du cadre, et du changement automatique de position de chaque cadre en position d'exposition par utilisation des données mémorisées de position du cadre pour le tirage du cadre sur du papier,
caractérisé en ce que :
les marques d'information qui sont utilisées pour le positionnement des cadres sont les bits de début ou de fin (18b, 18c) d'un code à barres DX, comptés et mémorisés en combinaison avec le nombre d'impulsions de pilotage constituant les données de positionnement de cadre.

2. Procédé selon la revendication 1, dans lequel chaque cadre de la pellicule photographique placé en position d'exposition est inspecté pour la détermination du fait que le cadre doit être tiré dans l'opération de tirage et mesuré pour la détermination d'une exposition en vue de l'opération de tirage.

3. Procédé selon la revendication 1, comprenant en outre la détermination du fait que chaque cadre doit être tiré, la saisie de données de correction d'exposition pour chaque cadre de la pellicule photographique déterminé comme devant être tiré dans l'opération de tirage, et la mesure de la pellicule photographique pour l'obtention de données d'intensité lumineuse transmises par chacun des cadres afin qu'une exposition soit déterminée à partir des données de correction d'exposition et des données d'intensité lumineuse de l'opération de tirage.

4. Procédé selon la revendication 1, comprenant en outre la mesure de la pellicule photographique pour l'obtention de données d'exposition pour chacun des cadres placé en position d'exposition et la mémorisation des données d'exposition obtenues dans l'opération d'inspection, et la restitution des données d'exposition du cadre placé dans la position d'exposition afin que le cadre soit exposé en fonction des données d'exposition.

5. Procédé selon la revendication 1, comprenant en outre la détermination du fait que chacun des cadres de la pellicule photographique, placé en position d'exposition, doit être tiré, la mesure de la pellicule photographique pour l'obtention de données d'exposition pour chacun des cadres, et la mémorisation des données d'exposition dans l'opération d'inspection, et la restitution des données d'exposition pour le cadre placé en position d'exposition afin que le cadre soit exposé en fonction des données d'exposition pendant l'opération de tirage.

6. Procédé selon la revendication 1, comprenant en outre la détermination du fait que chacun des cadres de la pellicule photographique, placé en position d'exposition, doit être tiré, la saisie de données de correction d'exposition pour chaque cadre déterminé comme devant être tiré, la mesure de la pellicule photographique pour l'obtention de données relatives à l'intensité lumineuse transmise par chacun des cadres afin qu'une exposition puisse être déterminée à partir des données de correction d'exposition et des données mesurées d'intensité de lumière, et la mémorisation des données d'exposition dans une mémoire, pendant l'opération d'inspection, puis la restitution des données d'exposition du cadre placé en position d'exposition à partir de la mémoire afin que le cadre soit exposée en fonction des données d'exposition, pendant l'opération de tirage.

7. Procédé selon la revendication 2, 3 ou 6, dans lequel la pellicule photographique est déplacée sans mémorisation des données de position d'un cadre placé dans la position d'exposition lorsque le cadre est déterminé comme ne devant pas être tiré au cours de l'opération d'inspection.

8. Procédé selon l'une quelconque des revendications 1 à 7, dans lequel la pellicule photographique est déplacée d'une longueur constante correspondant au pas de disposition des cadres de manière que chaque cadre soit placé en position d'exposition.

9. Appareil destiné à la mise en oeuvre du procédé selon la revendication 1 pour la réalisation d'épreuves d'une pellicule photographique (18) ayant des codes à barres DX (18a) comprenant des bits initial et final de code (18b, 18c), associés aux cadres, dans lequel la pellicule photographique est déplacée par intermittence dans un premier sens par un moteur à impulsions (23) afin que la pellicule photographique soit mise en position d'exposition (E) cadre par cadre dans une opération d'inspection, et dans l'autre sens par le moteur à impulsions (23) afin qu'une pellicule photographique (18) soit mise dans des positions identiques aux positions d'exposition dans lesquelles la pellicule photographique est placée pendant l'opération d'inspection de manière que la pellicule photographique soit projetée sur un papier photographique, cadre par cadre, pour la réalisation d'épreuves à partir de la pellicule photographique dans une opération de tirage, l'appareil comprenant :
un dispositif (51) de déplacement d'une longueur constante destiné à appliquer un nombre prédéterminé d'impulsions de pilotage au moteur à impulsions (23) afin que la pellicule photographique (18) soit déplacée dans le premier sens dans l'opération d'inspection,
un dispositif (54) de correction destiné à piloter le moteur à impulsions (23) de manière correctrice afin que la pellicule photographique (18) soit placée avec précision en position d'inspection pendant l'opération d'inspection,
un dispositif (27) de détection de l'un des bits initial et final de code (18b, 18c) du code à barres DX (18a), dans l'opération d'inspection,
un compteur (70) de codes DX commandé lorsque le détecteur (17) détecte le bit initial ou final (18b, 18c) de code, afin qu'il compte les codes DX (18a) dans l'opération d'inspection et décompte les codes DX dans l'opération de tirage,
un compteur (71) d'impulsions de pilotage qui est destiné à être remis à zéro en synchronisme avec le début du comptage du compteur de codes DX (70) pour le comptage d'impulsions de pilotage appliquées au moteur à impulsions,
un dispositif opérationnel (76) destiné à calculer un nombre d'impulsions de pilotage N - n - m, N, n et m étant respectivement le nombre d'impulsions de pilotage nécessaire au déplacement de la pellicule photographique (18) de la longueur comprise entre les bits initiaux ou finaux (18b, 18c) de deux codes DX adjacents (18a), le nombre d'impulsions de pilotage compté par le compteur (71) d'impulsions de pilotage avant que chacun des cadres ne soit placé en position d'exposition (E), et le nombre d'impulsions de pilotage correspondant à l'intervalle de temps compris entre les moments auxquels le dispositif (27) de détection de bit de code détecte l'un des bits initiaux et finaux (18b, 18c) dans un sens et dans l'autre respectivement,
une mémoire (75) destinée à mémoriser une combinaison du nombre des impulsions de pilotage (N - n - m) et les nombres du compteur (70) de codes DX comme données de position pour chacun des cadres en position d'exposition, et
un dispositif (32) de commande destiné à faire tourner de manière réversible le moteur à impulsions (23) afin qu'il fasse reculer la pellicule photographique jusqu'à ce que des données de positions identiques à celles des données lues dans la mémoire pour un cadre à tirer soient cbtenues dans l'opération de tirage, si bien que le cadre à tirer est placé avec précision en position d'exposition.
